# EUROPEAN PATENT APPLICATION

(11) **EP 3 575 028 A1**
(43) Date of publication of application: **04.12.2019**
(21) Application number: 18744935.0
(22) Date of filing: 16.01.2018
(51) Int. Cl.: B23K 11/11, B23K 11/16, B23K 11/34

(54) **METHOD FOR PROCESSING INSULATOR AND FOREIGN OBJECT, AND DEVICE FOR SAME**

(30) Priority: 30.01.2017 JP 2017014470
(71) Applicant: Art-Hikari Co., Ltd., Tatebayashi-shi, Gunma 274-0054 (JP)
(72) Inventor: FURUKAWA KAZUTOSHI, Tatebayashi-shi Gunma 274-0054 (JP)
(74) Representative: Herrero & Asociados, S.L.
(86) International application number: PCT/JP2018/000890
(87) International publication number: WO 2018/139239

(57) **Abstract**

A processing method in which there is used a resistance welder (1) for performing welding by applying pressure to weld objects to be welded, wherein before electrical power is provided for welding, at least one electrode (2, 3) is caused to vibrate, and the vibration is used to eliminate an insulator or foreign object on the surface of an object to be welded or between objects to be welded. Also, the resistance welder (1) comprises a vibration mechanism (7) for eliminating an insulator or foreign material on the surface of an object to be welded or between objects to be welded, the vibration mechanism (7) causing at least one electrode (2, 3) to vibrate. The present invention makes it possible to efficiently eliminate insulators and foreign objects from workpiece surfaces or from between workpieces.

## Description

### TECHNICAL FIELD

The present invention relates to a method and apparatus for processing an insulating material or a foreign material. Particularly, the present invention relates to a method and apparatus for processing an insulating material or a foreign material present on surfaces of workpieces or between the workpieces so as to perform resistance welding reliably.

### BACKGROUND ART

Resistance welding is a method for supplying a large current to a welding portion to generate a resistance heat (joule heat) and heat a bonding portion with the resistance heat and applying large pressure to weld workpieces. Generally, resistance welding is classified broadly into overlap resistance welding and butt resistance welding.

Among these welding methods, overlap resistance welding is a resistance welding method of performing welding while applying pressure from both sides of an overlapping joint, and a representative example thereof is spot welding (point welding). Spot welding involves placing two metal sheets so as to overlap each other, applying pressure and current to the metal sheets using round rod-shaped electrodes to generate resistance heat, heating the metal with the resistance heat to create a molten state, applying pressure to create a dot-shaped weld joint. Since a welding time per point is very short, working efficiency is satisfactory and this spot welding method is often used as a method for welding automobile bodies and the like, particularly.

In such resistance welding, it is not possible to weld workpieces if an insulating material is present on surfaces of the workpiece or between the workpieces since this welding method is configured to weld workpieces using a contact resistance between welding target objects (workpieces). In some cases, a spark may occur which may result in welding defects or an accident.

Although an elimination technology which uses application of current is known as a technology for eliminating an insulating material or a foreign material, development of a new technology is required to efficiently cope with various workpiece conditions.

### CITATION LIST

### PATENT DOCUMENT

Patent Document 1: Japanese Patent No. 5559624

### SUMMARY OF THE INVENTION

### PROBLEMS TO BE SOLVED BY THE INVENTION

Therefore, an object of the present application invention is to provide a new method and apparatus for eliminating an insulating material, a foreign material, or the like on surfaces of workpieces or between the workpieces.

### SOLUTIONS TO PROBLEMS

In order to solve the problem, the present invention provides a processing method which uses a resistance welding apparatus that applies pressure to perform welding so as to weld welding target objects, the method including: vibrating at least one electrode before applying a welding current; and eliminating an insulating material or a foreign material on surfaces of the welding target objects or between the welding target objects using the vibration.

The electrode is preferably a spot welding electrode.

The vibration is preferably generated by changing pressure applied by the electrode to a workpiece.

The vibration is preferably applied by a vibrating mechanism.

The vibrating mechanism preferably includes at least one gear.

The gear is preferably a cam gear.

The vibration preferably uses vibration generated from a transformer of the resistance welding apparatus.

The present invention also provides a resistance welding apparatus that applies pressure to perform welding so as to weld welding target objects, including: a vibrating mechanism that vibrates at least one electrode so as to eliminate an insulating material or a foreign material on surfaces of the welding target objects or between the welding target objects.

The electrode vibrating mechanism preferably includes at least one gear.

The gear is preferably a cam gear.

The present invention vibrates an electrode itself to eliminate an insulating material or the like on surfaces of workpieces or between the workpiece. In the present invention, elimination embraces concepts such as destruction, extrusion, and wearing. Since resistance welding performs welding using resistance heating between electrodes, when the electrodes the electrode itself can eliminate an insulating material physically, facility efficiency is improved, an elimination position corresponds to a welding point, and it is helpful in improving final welding quality. In the present application, vibration is a concept embracing a reciprocating motion of an electrode in a short time period in a direction including a vertical direction or a horizontal direction with respect to workpieces, capable of physically eliminating an insulating material and repetition (pressure vibration from an electrode to a work at a spot point) of instantaneous change in pressure to a workpiece as well as a case in which an electrode point surely moves with respect to a workpiece. In the present invention, examples of an insulating material or the like present on workpieces include a foreign material such as dust and insulating coatings formed on workpieces such as a water-repellent putty, a sealing, an adhesive, and a rust preventing agent. These materials are provided essentially or optionally during welding or for quality improvement of final products. Since these insulating coatings are often applied to an entire workpiece, it is desirable to eliminate an insulating coating on a welding point only. Moreover, since an insulating oxide film is present on a surface of some sheet, it is necessary to remove the film to realize welding satisfactorily.

Vibration is applied by vibrating at least one electrode. Most typically, vibration can be directly applied by vibrating an approximately rod-shaped electrode of a spot welding apparatus. However, another resistance welding apparatus or another electrode may be used as long as the object of the present invention can be attained. There is no limitation to a case in which an electrode only vibrates such as a case in which an electrode vibrates following vibration of an arm or a case in which vibration of an entire apparatus is used. In addition to these means, other means may be employed as long as it is possible to apply vibration to at least one electrode to eliminate an insulating material or a foreign material.

As a specific vibration means using an existing welding machine as it is, a method of causing electrodes to repeatedly move up and down with respect to workpieces using a servo motor or the like, for example, may be employed. Particularly, a method which uses change in pressure while maintaining contact with workpieces is preferably used. That is, when change in pressure of 100 kg and 40 kg, for example, is repeated instantaneously using a servo motor or the like, electrodes finely vibrate in a vertical direction while maintaining contact with workpieces. According to this method, an insulating material can be eliminated while continuously making contact with workpieces and in the meantime, current can be applied. In addition to this method, various methods such as providing an additional mechanism for applying vibration to a position at which motion can be applied to a distal end of an electrode can be used as long as the effect of the present invention is achieved.

A means for applying vibration in a horizontal direction to an electrode may be employed. As a mechanism for applying vibration in a horizontal direction, an additional mechanism for vibrating electrodes independently may be provided. As a specific example which poses less facility burden, this mechanism can be realized by a cam gear mechanism provided at a position at which upper and lower electrodes of an X-type gun, for example, are coupled to an arm so as to apply motion synchronized with the arm. The cam gear is an eccentric gear in which the distance from the center to a circumference is not constant. When a cam gear rotates, the arm performs periodic motion in a direction including a horizontal direction in synchronization with the rotation. Using this motion, vibration in a horizontal direction is generated. This configuration is advantageous when an insulating material or a foreign material is rubbed and eliminated. In this configuration, when one electrode is being vibrated, workpieces can be held by maintaining the pressure applied by the other electrode.

Furthermore, a means that uses vibration generated from a transformer may be employed. Similarly to generating vibration by repeatedly changing pressure instantaneously, when a high voltage (current) and a low voltage (current) are applied to a transformer repeatedly in a short period, the transformer itself vibrates due to change in a magnetic field which arose or the like. An apparatus including electrodes is vibrated using the vibration which is to be suppressed in normal welding methods.

An interval and/or a magnitude of vibration are appropriately set depending on the properties of an insulating material or a foreign material, and a workpiece and are not particularly limited. For example, vibration of a period of 0.5 to 10 mm/sec may be used.

A method disclosed in Japanese Patent No. 5559624 can be used for checking whether an insulating material or the like has been removed or not. Moreover, a method in which contact with a workpiece is maintained during vibration may be used in combination with the method disclosed in Japanese Patent No. 5559624.

### ADVANTAGEOUS EFFECTS OF THE INVENTION

According to the present invention, it is possible to efficiently eliminate an insulating material or a foreign material on surfaces of workpieces or between the workpieces.

### BRIEF DESCRIPTION OF DRAWINGS

FIG. 1 is a diagram illustrating an example of an apparatus used in the present invention.
FIG. 2 is a diagram illustrating another example of an apparatus used in the present invention.
FIG. 3 is a diagram illustrating an example of a gear used in the apparatus used in the present invention.
FIG. 4 is a diagram illustrating another example of a gear used in the apparatus used in the present invention.
FIG. 5 is a diagram illustrating an example of voltages applied to a transformer used in a method of the present invention.

### MODE FOR CARRYING OUT THE INVENTION

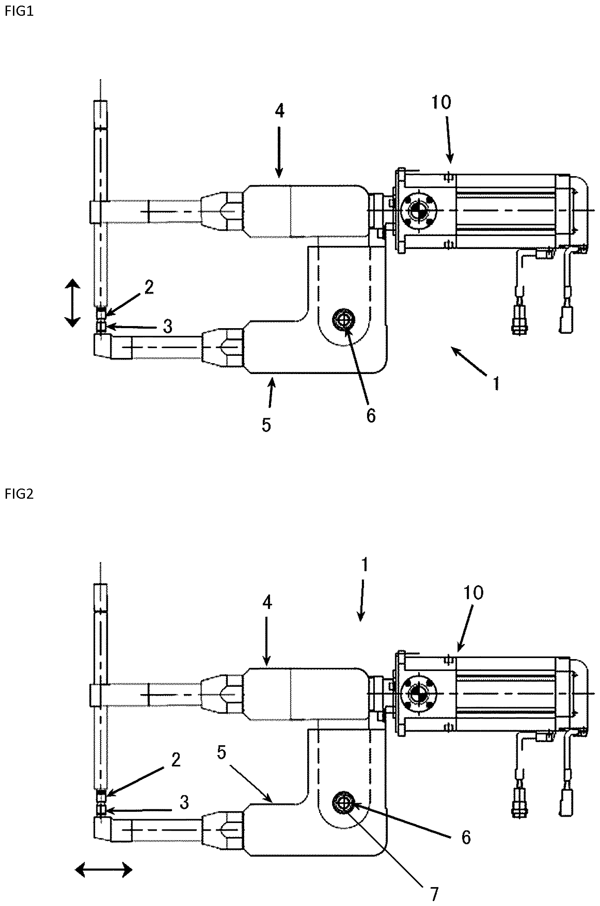

An example of an electrode and an apparatus according to an embodiment of the present invention will be described with reference to the drawings. FIG. 1 is a diagram illustrating an example of an apparatus used in the present invention and illustrates an X-type spot welding gun 1. An upper electrode 2 and a lower electrode 3 are provided at a distal end of the welding gun 1, and an upper arm 4 and a lower arm 5, and a transformer 10 are provided. The upper arm 4 and the lower arm 5 are connected by a coupling portion 6.

The upper arm 4 can move in a vertical direction (up and down) to apply necessary pressure to workpieces. In this case, the pressure can be changed instantaneously by a servo motor. Therefore, the pressure of the upper arm 4 is changed greatly in units of mm/sec whereby an electrode vibrates and an insulating material or a foreign material on surfaces of the workpieces or between the workpieces is eliminated.

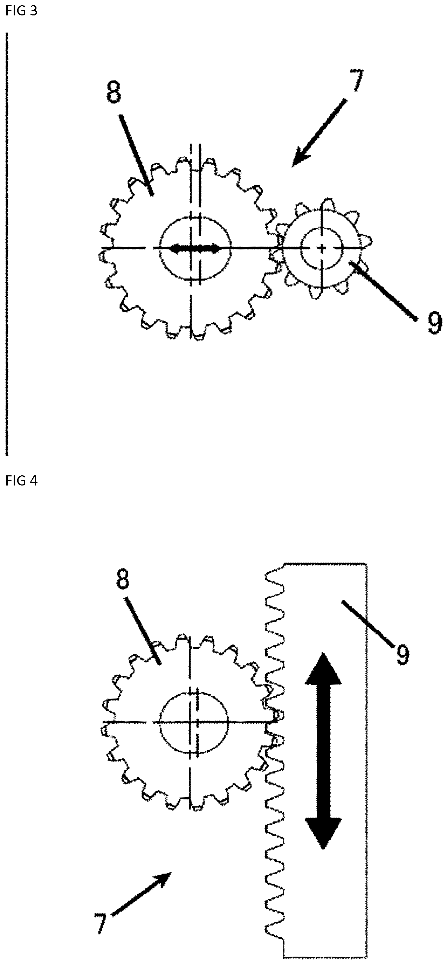

FIG. 2 illustrates an example in which a gear mechanism 7 is provided in the coupling portion 6. A cam gear 8 is coupled to the lower arm 5 so that the lower arm vibrates in a direction including a horizontal direction. Specifically, since the cam gear 8 has an eccentric shape as illustrated in FIG. 3 or 4, when the cam gear 8 is rotated by a driving member 9, the lower arm 5 performs a reciprocating motion including a horizontal direction following the rotation. With this reciprocating motion, an insulating material or a foreign material is eliminated by being rubbed by the upper and lower electrodes.

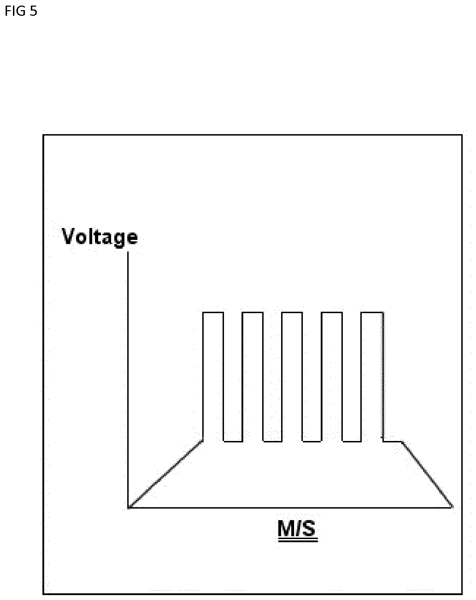

FIG. 5 illustrates an example of voltages applied to the transformer. A vertical axis indicates a voltage and a horizontal axis indicates time. For example, when a voltage ratio (or a current ratio) of 10:3 is instantaneously switched in units of mm/sec, the transformer generates vibration due to the abrupt difference. Using this vibration, the electrode is vibrated to eliminate an insulating material or a foreign material without adding an additional facility to an existing apparatus.

### REFERENCE SIGNS LIST

- 1:: Welding gun
- 2:: Upper electrode
- 3:: Lower electrode
- 4:: Upper arm
- 5:: Lower arm
- 6:: Coupling portion
- 7:: Gear mechanism
- 8:: Gear
- 9:: Driving member
- 10:: Transformer

## Claims

1. A processing method which uses a resistance welding apparatus that applies pressure to perform welding so as to weld welding target objects, the method comprising:
vibrating at least one electrode before applying a welding current; and
eliminating an insulating material or a foreign material on surfaces of the welding target objects or between the welding target objects using the vibration.

2. The processing method according to claim 1, wherein
the electrode is a spot welding electrode.

3. The processing method according to claim 1 or 2, wherein
the vibration is generated by changing pressure applied by the electrode to a workpiece.

4. The processing method according to claim 1 or 2, wherein
the vibration is applied by a vibrating mechanism.

5. The processing method according to claim 4, wherein
the vibrating mechanism includes at least one gear.

6. The processing method according to claim 5, wherein
the gear is a cam gear.

7. The processing method according to claim 1 or 2, wherein
the vibration uses vibration generated from a transformer of the resistance welding apparatus.

8. A resistance welding apparatus that applies pressure to perform welding so as to weld welding target objects, comprising:
a vibrating mechanism that vibrates at least one electrode so as to eliminate an insulating material or a foreign material on surfaces of the welding target objects or between the welding target objects.

9. The resistance welding apparatus according to claim 8, wherein
the electrode vibrating mechanism includes at least one gear.

10. The resistance welding apparatus according to claim 8, wherein
the gear is a cam gear.
